# EUROPEAN PATENT APPLICATION

(11) **EP 3 599 138 A1**
(43) Date of publication of application: **29.01.2020**
(21) Application number: 19187121.9
(22) Date of filing: 18.07.2019
(51) Int. Cl.: B60S 1/04

(54) **WINDSHIELD WIPER LINKAGE AND METHOD FOR SCREW-FREE MOUNTING THE SAME**

(30) Priority: 27.07.2018 BR 102018015435
(71) Applicant: Valeo Sistemas Automotivos Ltda, 13053-050 Campinas (BR)
(72) Inventor: GOMEZ, JOSÉ CARLOS, 13053050 Campinas (BR)
(74) Representative: Valeo Systèmes d'Essuyage

(57) **Abstract**

The present invention relates to a windshield wiper linkage (1), which is screw-free mounted on a carbody, the windshield wiper linkage (1) comprising: two wiper pivot housings (P1, P2), each positioned in an end portion of the windshield wiper linkage (1) and linked by a connecting structure (R1), an elliptical tenon (P1.1, P2.1) extending perpendicularly from each of the pivot housings (P1, P2), the tenon (P1.1, P2.1) having an elliptical profile configured to be fitted in a bracket slot (C1.1, C2.1) located at a bracket (C1, C2) at the carbody, the minor geometrical axis of the elliptical tenon (P1.1, P2.1) being dimensioned to be smaller than the opening of the bracket slot (C1.1, C2.1) and the major geometrical axis of the elliptical tenon (P1.1, P2.1) being dimensioned to be greater than the opening of the bracket slot (C1.1, C2.1), thereby, allowing the insertion of the elliptical tenon (P1.1, P2.1) in the bracket slot (C1.1, C2.1) by the minor geometrical axis of the elliptical tenon (P1.1, P2.1) and the fastening of the elliptical tenon (P1.1, P2.1) in the bracket slot (C1.1, C2.1) by the major geometrical axis of the elliptical tenon (P1.1, P2.1), when it is orthogonal to the opening of the bracket slot (C1.1, C2.1), through rotation of the entire windshield wiper linkage (1). The invention also relates to a method for screw-free mounting said windshield wiper linkage (1) on a carbody, comprising the steps of: positioning the windshield wiper linkage (1) in direction of the bracket slot (C1.1, C2.1), introducing the elliptical tenon (P1.1, P2.1) of the windshield wiper linkage (1) into the opening of the bracket slot (C1.1, C2.1) by the minor geometrical axis thereof, and rotating the windshield wiper linkage (1) until the elliptical tenon (P1.1, P2.1) is fastened in the bracket slot (C1.1, C2.1) by the major geometrical axis thereof, when it is orthogonal to the opening of the bracket slot (C1.1, C2.1).

## Description

### FIELD OF THE INVENTION

The present invention relates to a windshield wiper linkage, which is screw-free mounted on a carbody, and a method for screw-free mounting the same on a carbody in a more efficient, simple and fast manner.

### DESCRIPTION OF THE STATE OF THE ART

In existing windshield wiper linkages, in order to mount the windshield wiper linkage on a vehicle structure, or carbody, it is frequently used screws and nuts. The mounting process is relatively complex, costly and time-consuming.

Patent FR3029476 discloses the axial fixation of a windshield wiper linkage on a carbody without screws.

It discloses a fastening device for connecting a wiper bearing of a vehicle wiper system comprising: a bearing element having a first flat face, a bearing section protruding in the direction perpendicular to the first face of the bearing element for guiding a wiper shaft, and one or more gripping means on the bearing section and comprising a gripping surface parallel to the first face of the bearing element.

In this prior art document, however, the pivot housing fixation is done axially and individually for each pivot, while, in the present invention, the fixation is radial and simultaneous for both pivot housings together, that is, with a single rotation movement of the entire windshield wiper linkage. Therefore, with the present invention, it takes less time for the fixation of the linkage on the carbody.

One disadvantage of the system of this prior art document is that, due to its fixation, the pivot housing can only be used individually and fixed separately from the rest of the linkage, which means that it is not possible to design a modular linkage (DS and PS joined by a connecting structure, such as a tube, rod or barrel).

Furthermore, the device of FR3029476 does not have any grommet to absorb system flexion, vibration or noises, or an integrated pedestrian safety arrangement.

Patent FR2733474 discloses a wiper device for a motor vehicle including at least a holder for guiding and fixing a shaft for driving a wiper in alternating sweep, the holder having a barrel in which the drive shaft is rotatably mounted, the holder being fixed to the carbody by a transverse sole plate and the holder being connected to the wiper device by a transverse stub, or tenon, characterized in that the holder has at least one breaking area with a reduced resistant section, intended to disconnect the wiper device from the carbody in the event of a violent impact.

The main purpose of this prior art document is to protect the passengers of the vehicle, and not the pedestrian, in case of impact. The plate or the stub of the holder is broken in the breaking area to avoid the penetration of the motor/linkage inside the cabin through the windshield.

In this prior art document, the rupture mechanism is in the internal portion of the device, that is, between the holders, and, thus, it does not work as a pedestrian safety system.

The object of document FR2733474 does not comply with the pedestrian safety regulations since the pivot shaft will not collapse in case of a run over, thus, injuring the pedestrian.

The present patent application solves the problems encountered in the state of the art by providing a windshield wiper linkage, which is screw-free mounted on a carbody, comprising: two wiper pivot housings, each positioned in an end portion of the windshield wiper linkage and linked by a connecting structure, an elliptical tenon extending perpendicularly from each of the pivot housings, the tenon having an elliptical profile configured to be fitted in a bracket slot located at a bracket at the carbody, wherein the minor geometrical axis of the elliptical tenon is dimensioned to be smaller than the opening of the bracket slot and the major geometrical axis of the elliptical tenon is dimensioned to be greater than the opening of the bracket slot, thereby, allowing the insertion of the elliptical tenon in the bracket slot by the minor geometrical axis of the elliptical tenon and the fastening of the elliptical tenon in the bracket slot by the major geometrical axis of the elliptical tenon, when it is orthogonal to the opening of the bracket slot, through rotation of the entire windshield wiper linkage. The application also relates to a method for screw-free mounting said windshield wiper linkage on a carbody.

Differently from the existing wiper linkages, the windshield wiper linkage of the present invention provides a quick and easy fixation of the windshield wiper linkage on a carbody without screws, therefore, rendering the overall process of mounting the vehicle faster and less costly. Furthermore, the windshield wiper linkage of the present invention includes an efficient pedestrian safety arrangement integrated with the pivot housing.

### OBJECTS OF THE INVENTION

It is a first object of the present invention to provide a windshield wiper linkage, which is mounted on a carbody without screws or nuts, rendering the overall process of mounting the vehicle faster, easier and less costly.

It is a second object of the present invention to provide a windshield wiper linkage, which is mounted on a carbody at once, with a single rotation movement thereof.

It is a third object of the present invention to provide a windshield wiper linkage having a pedestrian safety arrange integrated.

The objects of the invention described above are achieved by the windshield wiper linkage and the method for screw-free mounting the same on a carbody, which will be better described below.

### SUMMARY OF THE INVENTION

The present invention achieves these and other objects by means of a windshield wiper linkage, which is screw-free mounted on a carbody, the windshield wiper linkage comprising: two wiper pivot housings, each positioned in an end portion of the windshield wiper linkage and linked by a connecting structure, such as a tube, rod or barrel, an elliptical tenon extending perpendicularly from each of the pivot housings, the tenon having an elliptical profile configured to be fitted in a bracket slot located at a bracket at the carbody. The minor geometrical axis of the elliptical tenon is dimensioned to be smaller than the opening of the bracket slot and the major geometrical axis of the elliptical tenon is dimensioned to be greater than the opening of the bracket slot, thereby, allowing the insertion of the elliptical tenon in the bracket slot by the minor geometrical axis of the elliptical tenon and the fastening of the elliptical tenon in the bracket slot by the major geometrical axis of the elliptical tenon, when it is orthogonal to the opening of the bracket slot, through rotation of the windshield wiper linkage.

The pivot housings can be made, for example, of metallic alloys or plastic.

In a preferred embodiment, the windshield wiper linkage further comprises a damper grommet, made of a resilient material, preferably, rubber, mounted on the elliptical tenon, which absorbs vibrations, flexions, noises etc.

The rotation of the windshield wiper linkage will radially compress the damper grommet and generate a tightness force against the bracket slot.

In a preferred embodiment, the elliptical tenon has a frangible portion, adjacent to each of the pivot housings, capable of fracture under impact, allowing the separation of the windshield wiper linkage from the carbody and the lowering of the entire windshield wiper linkage below the carbody. This special feature allows breaking the elliptical tenons when submitted to an impact, for instance, caused by a pedestrian collision, therefore, avoiding seriously injuring the head or body of the pedestrian in case of an accident.

In a preferred embodiment, the frangible portion has at least one open ended notch, for example. However, it may have other shapes, such as a groove in "V".

In a preferred embodiment, the windshield wiper linkage further comprises a flexible latch integrated with the tenon, which is locked in the bracket when the tenon is in the fastened position. This feature ensures that the elliptical tenon is properly fitted, and fastened, into the bracket slot.

The windshield wiper linkage, according to the present invention, may further comprise an expansive plug attachable to a 3^{rd} point fixation bracket located at the carbody for an even more secure and tight fixation of the linkage. An additional damper grommet, made of a resilient material, preferably, rubber, may be mounted on the expansive plug in a preferred embodiment.

The present invention also achieves the above-described objects by means of a method for mounting, without screws or nuts etc., the windshield wiper linkage on a carbody, comprising the steps of: positioning the windshield wiper linkage in direction of the bracket slot, introducing the elliptical tenon of the windshield wiper linkage into the opening of the bracket slot by the minor geometrical axis thereof, and rotating the windshield wiper linkage until the elliptical tenon is fastened in the bracket slot by the major geometrical axis thereof, when it is orthogonal to the opening of the bracket slot.

In a preferred embodiment, the windshield wiper linkage is rotated in direction of the 3^{rd} point fixation bracket.

Due to the elliptical tenon profile, the rotation of the windshield wiper linkage will radially compress the damper grommet, generating a tightness force against the bracket slot.

In a preferred embodiment, the method further comprises the step of locking the flexible latch in the bracket when the tenon is in the fastened position, so as to ensure that the elliptical tenon is properly fastened in the bracket slot.

According to a preferred embodiment, the expansive plug is attached to the 3^{rd} point fixation bracket located at the carbody, the additional damper grommet being axially compressed at this stage, namely, upon the attachment of the expansive plug to the 3^{rd} point fixation bracket.

### BRIEF DESCRIPTION OF THE DRAWINGS

The present invention will be described based on examples shown in the attached figures, in which:
Figure 1 is a perspective view of the windshield wiper linkage, object of the present application, showing the windshield wiper linkage, the two pivot housings, the elliptical tenons, the connecting structure, the bracket slots, the brackets at the carbody, the damper grommet, the expansive plug, the 3rd point fixation bracket at the carbody and the additional damper grommet;
Figure 2 is a partial view of the windshield wiper linkage, object of the present application, showing one of the pivot housings, the elliptical tenon and the flexible latch;
Figure 3 is a partial view of the windshield wiper linkage, object of the present application, showing one of the pivot housings and the flexible latch locked in the bracket of the carbody;
Figure 4 is a partial view of the windshield wiper linkage, object of the present application, showing an embodiment of frangible portion of the elliptical tenon;
Figure 5 is a cross-sectional view A-A of a portion of the windshield wiper linkage, object of the present application, showing the frangible portion of the elliptical tenon of the embodiment of Figure 4;
Figure 6 is a section view A-A showing the frangible portion of the elliptical tenon of Figures 4 and 5;
Figure 7 is a perspective side view of the windshield wiper linkage, object of the present application, showing the windshield wiper linkage being positioned in direction of one of the bracket slots located at the carbody;
Figure 8 is a perspective side view of the windshield wiper linkage, object of the present application, showing one of the elliptical tenons of the windshield wiper linkage being introduced into the opening of one of the bracket slots located at the carbody by the minor geometrical axis thereof, the arrow illustrating the rotation movement of the windshield wiper linkage; and
Figure 9 is a perspective side view of the windshield wiper linkage, object of the present application, showing the elliptical tenon of the windshield wiper linkage fastened in the bracket slot of the carbody by the major geometrical axis thereof, after the rotation of the windshield wiper linkage, the elliptical tenon being orthogonal to the opening of the bracket slot, and the expansive plug attached to the 3^{rd} point fixation bracket located at the carbody.

### DETAILED DESCRIPTION OF THE EMBODIMENTS OF THE INVENTION

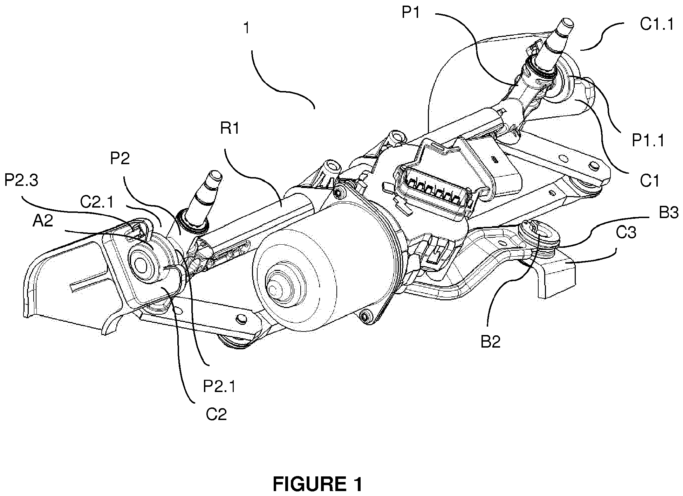

Figuras 1 to 9 show a preferred embodiment of the present invention, related to a windshield wiper linkage 1, which is screw-free mounted on a carbody, the windshield wiper linkage 1 comprising two wiper pivot housings P1, P2, each positioned in an end portion of the windshield wiper linkage 1 and linked by a connecting structure R1, such as a tube, rod, barrel etc., an elliptical tenon P1.1, P2.1 extending perpendicularly from each of the pivot housings P1, P2, the tenon P1.1, P2.1 having an elliptical profile configured to be fitted in a bracket slot C1.1, C2.1 located in a bracket C1, C2 at the carbody. The minor geometrical axis of the elliptical tenon P1.1, P2.1 is dimensioned to be smaller than the opening of the bracket slot C1.1, C2.1 and the major geometrical axis of the elliptical tenon P1.1, P2.1 is dimensioned to be greater than the opening of the bracket slot C1.1, C2.1, thereby, allowing the insertion of the elliptical tenon P1.1, P2.1 in the bracket slot C1.1, C2.1 by the minor geometrical axis of the elliptical tenon P1.1, P2.1 and the fastening of the elliptical tenon P1.1, P2.1 in the bracket slot C1.1, C2.1 by the major geometrical axis of the elliptical tenon P1.1, P2.1, when it is orthogonal to the opening of the bracket slot C1.1, C2.1, through rotation of the windshield wiper linkage 1.

In a preferred embodiment, the pivot housings P1, P2 are made, for example, of metallic alloys or plastic.

In the embodiment illustrated in Figures 1 to 9, the windshield wiper linkage 1 further comprises a damper grommet A1, A2, which is made of a resilient material, preferably, rubber, and mounted on the elliptical tenon P1.1, P2.1, for the absorption of vibrations, flexions, noises etc.

The rotation movement of the windshield wiper linkage 1 radially compresses the damper grommet A1, A2, and generates a tightness force against the bracket slot C1.1, C2.1.

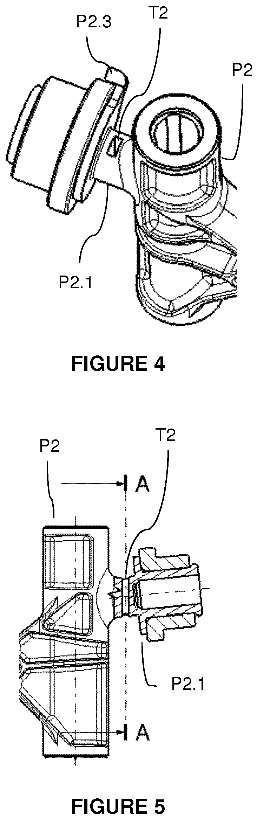

In a preferred embodiment, the elliptical tenon P1.1, P2.1 has a frangible portion T1, T2, illustrated in Figures 4, 5 and 6, which is adjacent to each of the pivot housings P1, P2 and capable of fracture under impact, allowing the separation of the windshield wiper linkage 1 from the carbody and the lowering of the entire windshield wiper linkage 1 below the carbody. This special feature allows breaking the elliptical tenons P1.1, P2.1 when submitted to an impact, for example, caused by a pedestrian collision, therefore, avoiding injuring the pedestrian in case of an accident.

In a preferred embodiment, as shown in Figures 4, 5 and 6, the frangible portion T1, T2 has at least one open ended notch. However, the frangible portion T1, T2 may have many other shapes, such as, for instance, a groove in "V".

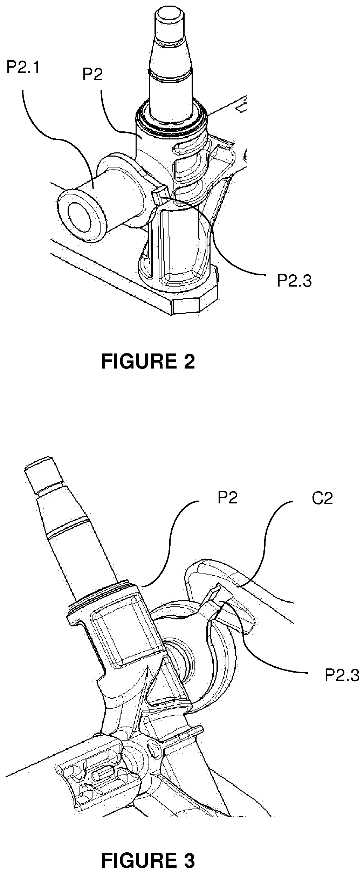

In a preferred embodiment, as illustrated in Figures 2 and 3, the windshield wiper linkage 1 further comprises a flexible latch P1.3, P2.3 integrated with the elliptical tenon P1.1, P2.1, which is locked in the bracket C1, C2 when the elliptical tenon P1.1, P2.1 is in the fastened position. This feature ensures that the proper fit, and fastening, of the elliptical tenon P1.1, P2.1 into the bracket slot C1.1, C2.1.

As illustrated in Figures 1, 7, 8 and 9, the windshield wiper linkage 1 may further comprise an expansive plug B2, attachable to a 3^{rd} point fixation bracket C3 located at the carbody. This feature ensures an even more secure and tight fixation of the windshield wiper linkage 1 to the carbody.

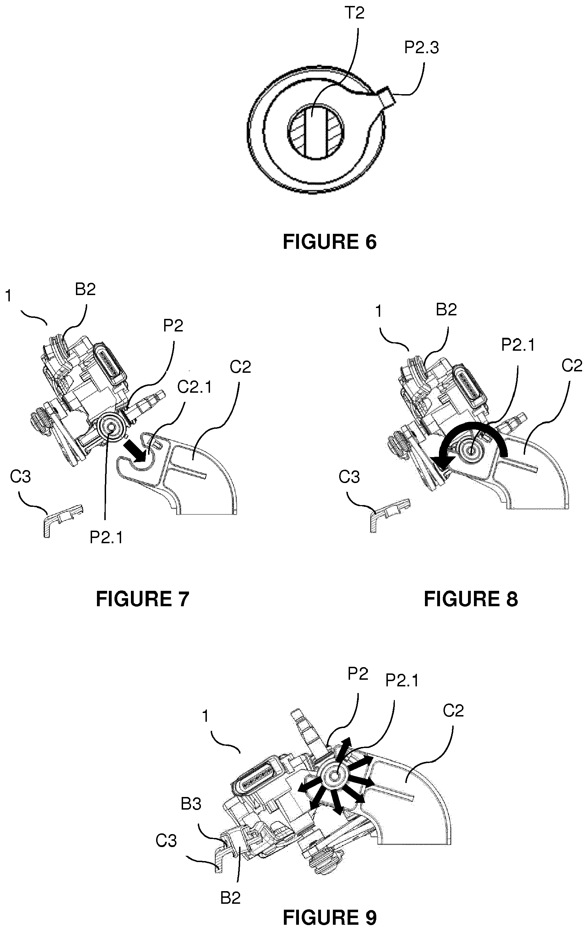

As can be seen, for instance, in Figures 1 and 9, in a preferred embodiment, the expansive plug B2 may comprise an additional damper grommet B3, made of a resilient material, preferably, rubber, for the absorption of vibrations, flexions, noises etc.

The method for screw-free mounting the windshield wiper linkage 1 on a carbody of the present invention is illustrated in Figures 7, 8 and 9. The steps of positioning the windshield wiper linkage 1 in direction of the bracket slot C1.1, C2.1 and introducing the elliptical tenon P1.1, P2.1 of the windshield wiper linkage 1 into the opening of the bracket slot C1.1, C2.1 by the minor geometrical axis thereof are shown in Figure 7. The subsequent step of rotating the windshield wiper linkage 1 until the elliptical tenon P1.1, P2.1 is fastened in the bracket slot C1.1, C2.1 by the major geometrical axis thereof, when it is orthogonal to the opening of the bracket slot C1.1, C2.1 is shown in Figure 8. The rotation movement is illustrated by the arrow in Figure 8.

In a preferred embodiment, illustrated in Figure 8, the windshield wiper linkage 1 is rotated in direction of the 3^{rd} point fixation bracket C3.

Due to the elliptical profile of the tenon P1.1, P2.1, the rotation of the windshield wiper linkage 1 will radially compress the damper grommet A1, A2, generating a tightness force against the bracket slot C1.1, C2.1, as can be seen in Figure 9. The windshield wiper linkage 1 is, therefore, tightly fixed, attached, to the carbody.

In a preferred embodiment, the method further comprises the step of locking the flexible latch P1.3, P2.3 in the bracket C1, C2 when the elliptical tenon P1.1, P2.1 is in the fastened position, as can be seen in Figure 3.

According to a preferred embodiment, as illustrated in Figures 1 and 9, the expansive plug B2 is attached to the 3^{rd} point fixation bracket C3 located at the carbody. The additional damper grommet B3 is axially compressed upon the attachment of the expansive plug B2 to the 3^{rd} point fixation bracket C3.

It should be understood that the windshield wiper linkage 1, and its components described above, are only some of the possible embodiments of the invention. The actual scope of the invention is defined in the following claims.

## Claims

1. Windshield wiper linkage (1), which is screw-free mounted on a carbody, **characterized by** comprising:
two wiper pivot housings (P1, P2), each positioned in an end portion of the windshield wiper linkage (1) and linked by a connecting structure (R1);
an elliptical tenon (P1.1, P2.1) extending perpendicularly from each of the pivot housings (P1, P2), the tenon (P1.1, P2.1) having an elliptical profile configured to be fitted in a bracket slot (C1.1, C2.1) located at a bracket (C1, C2) at the carbody;
wherein the minor geometrical axis of the elliptical tenon (P1.1, P2.1) is dimensioned to be smaller than the opening of the bracket slot (C1.1, C2.1) and the major geometrical axis of the elliptical tenon (P1.1, P2.1) is dimensioned to be greater than the opening of the bracket slot (C1.1, C2.1), thereby, allowing the insertion of the elliptical tenon (P1.1, P2.1) in the bracket slot (C1.1, C2.1) by the minor geometrical axis of the elliptical tenon (P1.1, P2.1) and the fastening of the elliptical tenon (P1.1, P2.1) in the bracket slot (C1.1, C2.1) by the major geometrical axis of the elliptical tenon (P1.1, P2.1), when it is orthogonal to the opening of the bracket slot (C1.1, C2.1), through rotation of the windshield wiper linkage (1).

2. Windshield wiper linkage (1), according to claim 1, **characterized by** further comprising a damper grommet (A1, A2) mounted on the elliptical tenon (P1.1, P2.1), wherein the damper grommet (A1, A2) is made of a resilient material, preferably, rubber.

3. Windshield wiper linkage (1), according to any one of claims 1 or 2, **characterized in that** the elliptical tenon (P1.1, P2.1) has a frangible portion (T1, T2) adjacent to each of the pivot housings (P1, P2), capable of fracture under impact, allowing the separation of the windshield wiper linkage (1) from the carbody and the lowering of the windshield wiper linkage (1) below the carbody.

4. Windshield wiper linkage (1), according to claim 3, **characterized in that** the frangible portion (T1, T2) has at least one open ended notch.

5. Windshield wiper linkage (1), according to any one of claims 1 to 4, **characterized by** further comprising a flexible latch (P1.3, P2.3) integrated with the tenon (P1.1, P2.1), the flexible latch (P1.3, P2.3) being locked in the bracket (C1, C2) when the tenon (P1.1, P2.1) is in the fastened position.

6. Windshield wiper linkage (1), according to any one of claims 1 to 4, **characterized by** further comprising an expansive plug (B2) attachable to a 3^{rd} point fixation bracket (C3) located at the carbody.

7. Windshield wiper linkage (1), according to claim 6, **characterized in that** by comprising an additional damper grommet (B3) mounted on the expansive plug (B2), wherein the additional damper grommet (B3) is made of a resilient material, preferably, rubber.

8. Method for screw-free mounting the windshield wiper linkage (1) as defined in any one of claims 1 to 7 on a carbody, **characterized by** comprising the steps of:
positioning the windshield wiper linkage (1) in direction of the bracket slot (C1.1, C2.1);
introducing the elliptical tenon (P1.1, P2.1) of the windshield wiper linkage (1) into the opening of the bracket slot (C1.1, C2.1) by the minor geometrical axis thereof; and
rotating the windshield wiper linkage (1) until the elliptical tenon (P1.1, P2.1) is fastened in the bracket slot (C1.1, C2.1) by the major geometrical axis thereof, when it is orthogonal to the opening of the bracket slot (C1.1, C2.1).

9. Method according to claim 8, **characterized by** further comprising the step of radially compressing the damper grommet (A1, A2) upon the rotation of the windshield wiper linkage (1).

10. Method according to claim 8 or 9, **characterized by** further comprising the step of locking the flexible latch (P1.3, P2.3) in the bracket (C1, C2) when the tenon (P1.1, P2.1) is in the fastened position.

11. Method according to any one of claims 8 to 10, **characterized by** further comprising the step of attaching the expansive plug (B2) to the 3^{rd} point fixation bracket (C3) located at the carbody.

12. Method according to claim 11, **characterized by** further comprising the step of axially compressing the additional damper grommet (B3) upon the attachment of the expansive plug (B2) to the 3^{rd} point fixation bracket (C3).
